# EUROPEAN PATENT APPLICATION

(11) **EP 4 394 069 A1**
(43) Date of publication of application: **03.07.2024**
(21) Application number: 22925587.2
(22) Date of filing: 12.07.2022
(51) Int. Cl.: C22C 33/06, C22C 38/02, C22C 38/04, C22C 38/06, C22C 38/18, B22D 41/02, C21C 7/00, C21C 7/06

(54) **METHOD FOR CONTROLLING BRITTLE INCLUSIONS OF TIRE CORD STEEL**

(30) Priority: 10.02.2022 CN 202210124343
(71) Applicant: ZHANGJIAGANG RONGSHENG SPECIAL STEEL CO. LTD., Jiangsu 215625 (CN); Institute Of Research Of Iron And Steel, Jiangsu Province/Sha-Steel, Co. Ltd (CN), Suzhou, Jiangsu 215625 (CN); Jiangsu Shagang Group Co., Ltd., Jiangsu 215625 (CN)
(72) Inventor: ZHAO, Jiaqi, Suzhou, Jiangsu 215625 (CN); ZHANG, Lianbing, Suzhou, Jiangsu 215625 (CN); MA, Jianchao, Suzhou, Jiangsu 215625 (CN); MA, Han, Suzhou, Jiangsu 215625 (CN)
(74) Representative: Gille Hrabal Partnerschaftsgesellschaft mbB Patentanwälte
(86) International application number: PCT/CN2022/105198
(87) International publication number: WO 2023/151228

(57) **Abstract**

Disclosed is a method for controlling brittle inclusions in cord steel. The method includes the following steps: adding alloys at the moment of tapping in a furnace primary smelting stage and adding silicon carbide and synthetic slag to a top of ladle slag at the end of tapping to form slag; adding the alloys in a refining stage and feeding carbon wires; and adding lime, silicon carbide, the synthetic slag, and performing electrification to slag, where the slag composition meets the following conditions: CaO/SiO₂=0.9-1.2, Al₂O₃≤5%, MgO 4-8%, [MnO+T.Fe] 2-5%.

## Description

### TECHNICAL FIELD

The disclosure belongs to the technical field of iron and steel smelting, and particularly relates to a method for controlling brittle inclusions in cord steel.

### BACKGROUND

In the current industry, cord steel is mainly used for fine drawing, and is usually drawn to fine wires with the diameters of 0.12-0.35 mm. When serving as a sawing wire, the cord steel needs to be even drawn until the diameter is 0.12 mm or less. The sawing wire which is also known as a cutting wire, a cutting steel wire, and a cut wire is a special wire rod for segmentation. As a consumable material, the sawing wire is widely applied to the fields of energy, aviation, equipment, and public facilities such as cutting and forming of solar silicon wafers, quartz materials, monocrystalline silicon, and polycrystalline silicon. Even tiny particles of a diamond can also be inlaid on the sawing wire to make a diamond cutting wire, otherwise known as a diamond wire, a diamond cutting wire and a diamond thread.

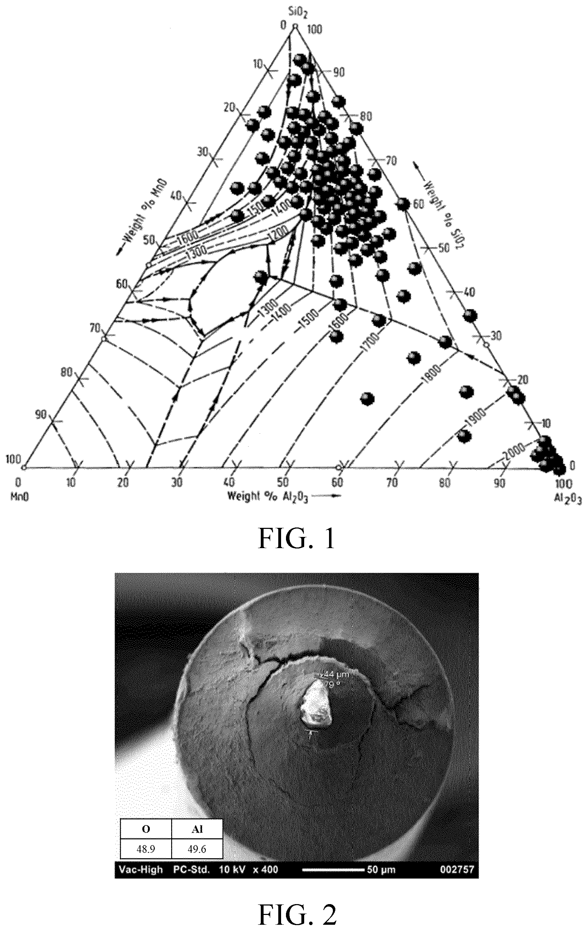

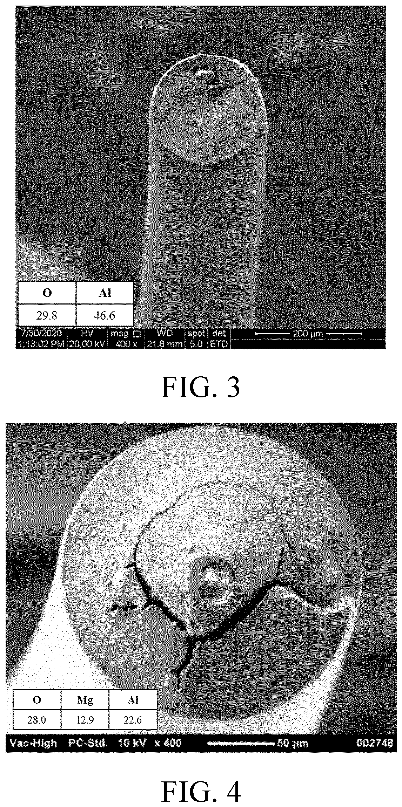

To reduce the loss of a cut material such as a silicon material in a cutting process, requirements on performance of the sawing wire are as follows: the diameter is smaller, the length of the wire which is not broken is greater, and the strength is higher. However, affected by inclusions in steel, particularly a wire breaking problem easily induced by brittle inclusions such as Al₂O₃ and magnesia-alumina spinel (MgO•Al₂O₃) in cord steel production, processing and using processes, the performance of the cord steel prepared in current industry serving as the sawing wire cannot meet the market requirement. As shown in FIGs. 1-4, FIG. 1 shows distribution of the inclusions in the cord steel prepared by an existing production process in an SiO₂-MnO-Al₂O₃ system ternary phase diagram, FIG. 2 shows fracture morphology of a finer wire of the cord steel prepared by the existing production process as a result of inclusion of Al₂O₃ at a core of a coil rod, FIG. 3 shows fracture morphology of the finer wire of the cord steel prepared by the existing production process as a result of inclusion of Al₂O₃ at an edge of the coil rod, and FIG. 4 shows fracture morphology of the finer wire of the cord steel prepared by the existing production process as a result of inclusion of magnesia-alumina spinel (MgO•Al₂O₃) at the core of the coil rod.

### SUMMARY

To solve at least one of the above technical problems, an object of the disclosure is to provide a method for controlling brittle inclusions in cord steel.

To achieve one of the above objects, an implementation of the disclosure provides a method for controlling brittle inclusions in cord steel, where chemical components of the cord steel include the following components in percent by mass: 0.70-0.95% of C, 0.15-0.45% of Si, 0.25-0.80% of Mn, 0.10-0.45% of Cr, less than or equal to 0.015% of P, less than or equal to 0.01% of S, less than or equal to 0.0008% of Al in total, less than or equal to 0.003% of N, less than or equal to 0.002% of O, and the balance of Fe and other inevitable impurities; and
the method includes the following steps performed in order:
in a furnace primary smelting stage, performing deoxidation alloying on molten steel, paving 0.5-1 kg/t silicon carbide and a 40-60% low-nitrogen carburant at a bottom of a ladle where the molten steel is carried before tapping, sequentially adding alloys for alloying in a tapping process, completing addition of all alloys when 75% of molten steel is tapped, starting to add the remaining 40-60% low-nitrogen carburant at a rate of 200-300 kg/min when 80% of the molten steel is tapped, finishing tapping after the low-nitrogen carburant is completely dissolved in the molten steel, adding the 0.5-1 kg/t silicon carbide to a top of ladle slag, and adding 3-5 kg/t synthetic slag to form slag;
in a refining stage, feeding the molten steel subjected to furnace primary smelting to a ladle furnace for refining and detecting the temperature, the chemical components, and the content of the molten steel, adding the alloys according to the detected chemical components and content of the molten steel and feeding carbon wires to adjust the chemical components of the molten steel to meet the following conditions in percent by mass: 0.70-0.95% of C, 0.15-0.45% of Si, 0.25-0.80% of Mn, 0.10-0.45% of Cr, less than or equal to 0.015% of P, less than or equal to 0.01% of S, less than or equal to 0.0008% of Al in total, less than or equal to 0.003% of N, less than or equal to 0.002% of O, and the balance of Fe and other inevitable impurities; and adding lime, the silicon carbide, and the synthetic slag and performing electrification to slag, adjusting the temperature of the molten steel to 1510-1535°C, making the slag composition meet the following conditions in percent by mass: CaO/SiO₂=0.9-1.2, Al₂O₃≤5%, MgO 4-8%, [MnO+T.Fe] 2-5%, and the balance of inevitable impurities, then adjusting ladle bottom blowing to a soft stirring pattern, where soft stirring time is longer than 20 min, and performing tapping; and
in a billet casting stage, conveying the molten steel after tapping in the refining stage to a continuous casting platform to stand for 15 min or more, importing stuffing sand into a slag receiving bucket at the start of ladle casting, and performing protective casting on the molten steel to a tundish to form a continuous casting billet;
where the alloys include ferrosilicon, manganese metal, and chromium iron, and where Al in the ferrosilicon is less than or equal to 0.035%, Al in the manganese metal is less than or equal to 0.015%, Al in the chromium iron is less than or equal to 0.020% and C in the chromium iron is less than or equal to 0.15%, and N in the low-nitrogen carburant is less than or equal to 0.015%.

By controlling the chemical components and the mass percent of the cord steel and further paving the silicon carbide and the low-nitrogen carburant at the bottom of the ladle in advance before tapping in the furnace primary smelting stage, boiling of the molten steel caused by addition of the low-nitrogen carburant at the bottom of the ladle in the initial tapping stage can be alleviated, the amount of the low-nitrogen carburant replenished in the tapping process of the primary smelting stage is reduced greatly, and a situation that a large amount of low-nitrogen carburant floating on the top of the slag is subjected to a reaction between carbon and oxygen to generate a large amount of gas which results in splashing of the molten steel is avoided, so that the ladle bottom blowing flow in the tapping process is reduced and the bottom blowing stirring time is shortened, and therefore, the erosion to a refractory material and the loss of the refractory material are alleviated, and the cleanliness of the molten steel is improved. Moreover, the consumption of the alloys due to deoxidation can be further reduced, so that the cost of the alloys is lowered. Besides, calcium carbide is replaced with silicon carbide, so that rapid deoxidation can be performed. The amount of the molten steel in the ladle in the initial tapping stage is small, the clearance of the ladle is large, and in this case, deoxidation boiling will not cause splashing of the molten steel. Furthermore, the generated SiO₂ contributes to controlling the basicity of slag of the ladle at a low level. Further, carbon powder is increased by virtue of the carbon wires in the refining stage, so that the carbon powder is directly fed into the molten steel, bottom blowing stirring of the ladle can be avoided, the erosion to the refractory material is alleviated, and generation of the brittle inclusions such as Al₂O₃ and magnesia-alumina spinel (MgO•Al₂O₃) is reduced. In addition, lime and synthetic slag are immediately added upon adjusting the chemical components of the molten steel to improve the basicity of slag, which contributes to adsorbing Al₂O₃ and SiO₂ inclusions. Further, in the billet casting stage, the stuffing sand is imported into the slag receiving bucket at the start of casting, which avoids a situation that the Al₂O₃ inclusions in the molten steel are increased as the stuffing sand enters the molten steel. In further combination with control of the Al content in the alloys, the Al₂O₃ inclusions and the SiO₂-MnO-Al₂O₃ composite inclusions in the molten steel can be reduced. Through the above method, the erosion to the refractory material can be reduced, the acid soluble aluminum Als in the molten steel can be reduced as well, Al₂O₃ precipitated in the billet casting stage is reduced, and the brittle inclusions such as Al₂O₃ and magnesia-alumina spinel (MgO•Al₂O₃) in the cord steel are controlled effectively, so that a wire breakage ratio of the cord steel in the production, processing, and using processes is reduced.

As a further improvement of an implementation of the disclosure, bottom bricks, molten pool bricks and closer bricks of the ladle all are magnesia carbon bricks, and in the magnesia carbon bricks, Al₂O₃ is less than or equal to 3%; slag line bricks and air bricks of the ladle are magnesium-zirconium-carbon bricks, and in the magnesium-zirconium-carbon bricks, Al₂O₃ is less than or equal to 3%; and a long nozzle of the ladle is a long corundum nozzle, an inner wall of the long nozzle is coated with an SiO₂ coating, and the thickness of the SiO₂ coating is 3-8 mm. By defining the materials of the refractory materials of the ladle including the bottom bricks, the molten pool bricks, the closer bricks, the slag line bricks, the air bricks and the long nozzle, controlling the content of Al₂O₃ therein, and coating the inner wall of the long nozzle with the SiO₂ coating (the SiO₂ coating with a high melting point may tolerate the molten steel at the casting temperature of 1500-1520°C), the entrainment of Al₂O₃ therein into the molten steel due to the erosion to the long nozzle of the ladle to form the Al₂O₃ inclusions is reduced, so that the erosion to the refractory materials of the ladle in a steelmaking process is reduced, Al₂O₃ and MgO entrained into the molten steel are reduced, and thus, generation of the brittle inclusions such as Al₂O₃ and magnesia-alumina spinel (MgO•Al₂O₃) in the finally prepared cord steel is greatly reduced. Therefore, the stability of the production quality of the cord steel is further improved.

As a further improvement of an implementation of the disclosure, the stuffing sand is silicochromium stuffing sand, where Al₂O₃ is less than or equal to 5%. The too high content of additional Al₂O₃ in the molten steel as the stuffing sand at the start of casting flushes into the tundish with the molten steel may be reduced, so that generation of the brittle inclusions such as Al₂O₃ and magnesia-alumina spinel (MgO•Al₂O₃) in the finally prepared cord steel is reduced.

As a further improvement of an implementation of the disclosure, an inner wall of the tundish is coated with a magnesium coating, and in the magnesium coating, Al₂O₃ is less than or equal to 2%; a retaining wall of the tundish is a magnesium-zirconium-carbon retaining wall, and in the magnesium-zirconium-carbon retaining wall, Al₂O₃ is less than or equal to 5%; and an upper nozzle and a submersed nozzle of the tundish both are magnesium-carbon nozzles, and in the magnesium-carbon nozzles, Al₂O₃ is less than or equal to 5%. By defining the material of the tundish and controlling the content of Al₂O₃ therein, the erosion to the tundish in the steelmaking process may be reduced, and Al₂O₃ and MgO entrained into the molten steel are reduced, so that generation of the brittle inclusions such as Al₂O₃ and magnesia-alumina spinel (MgO•Al₂O₃) in the finally prepared cord steel is greatly reduced.

As a further improvement of an implementation of the disclosure, the furnace primary smelting stage is performed in a converter or an electric furnace, the temperature of the molten steel at a smelting end-point is equal to or higher than 1650°C, C is equal to or greater than 0.10%, and O is less than or equal to 0.03%. By virtue of high-carbon and low-oxygen high-temperature tapping in the furnace primary smelting stage, the reaction intensity between the molten steel and the low-nitrogen carburant paved in the ladle in advance may be reduced. Moreover, silicon carbide paved in the ladle in advance may deoxidize the molten steel rapidly, so that the boiling degree of the molten steel may be alleviated, and therefore, the molten steel is prevented from splashing.

As a further improvement of an implementation of the disclosure, in the furnace primary smelting stage, a ladle bottom blowing flow in the initial tapping stage and the alloying process is 100-200 NL/min; the ladle bottom blowing flow in the process of starting to add the remaining 40-60% low-nitrogen carburant when 80% of the steel is tapped is 600-800 NL/min; and the ladle bottom blowing flow in the process of finishing tapping and adding the silicon carbide and the synthetic slag to the top of the ladle slag to form the slag is 300-500 NL/min. By turning up bottom blowing for the ladle in the process of adding the remaining 40-60% low-nitrogen carburant, the low-nitrogen carburant is involved in the molten steel. In the initial tapping stage, the alloying process, and the slagging process, small and medium-sized bottom blowing is used, so that the stirring intensity of the molten steel is reduced, slag entrainment is avoided, the erosion to the refractory material is alleviated, and the loss of the refractory material is reduced. Therefore, the cleanliness of the molten steel is improved, formation of a large amount of brittle inclusions such as Al₂O₃ and magnesia-alumina spinel (MgO•Al₂O₃) in the molten steel is avoided, and thus, frequent breakage of the wire as the inclusions enter the coil rod during deep processing drawing is avoided.

As a further improvement of an implementation of the disclosure, in the refining stage, the ladle bottom blowing flow during the time when the temperature, the chemical components and the content of the molten steel are detected is 100-150 NL/min; the ladle bottom blowing flow in the process of adding the alloys and feeding the carbon wires is 300-400 NL/min; the ladle bottom blowing flow in the process of performing electrification to slag is 200-300 NL/min; and the ladle bottom blowing flow in the soft stirring process is 30-80 NL/min. Small and medium-sized bottom blowing is used in the full refining stage, so that the stirring intensity of the molten steel is reduced, slag entrainment is avoided, the erosion to the refractory material is alleviated, and the loss of the refractory material is reduced. Therefore, the cleanliness of the molten steel is improved, formation of a large amount of brittle inclusions such as Al₂O₃ and magnesia-alumina spinel (MgO•Al₂O₃) in the molten steel is avoided, and thus, frequent breakage of the wire as the inclusions enter the coil rod during deep processing drawing is avoided.

As a further improvement of an implementation of the disclosure, from finishing of tapping in the furnace primary smelting stage to completion of adjustment of the chemical components of the molten steel in the refining stage, the basicity of slag of the ladle is less than or equal to 0.6; and in the refining stage, 1-2 kg/t lime, 1-1.5 kg/t silicon carbide, and 8-15 kg/t synthetic slag are added to make the basicity of slag of the ladle be 0.9-1.2. Without adding lime but only adding a small amount of synthetic slag with low basicity in the tapping process of the furnace primary smelting stage, the low basicity of slag of the ladle is ensured. The molten steel and the slag feature low oxidability, so that the dissolved aluminum in the molten steel may be reduced to an extremely low level, and precipitation of the Al₂O₃ inclusions in the continuous casting process is reduced. Moreover, Al in the alloys may further be oxidized into Al₂O₃ which floats up to the slag and is separated from the molten steel. Furthermore, the quantity of slag is small. In combination with small bottom blowing flow of the ladle, the erosion to the refractory material of the ladle can be significantly weakened, so that formation of the brittle inclusions such as Al₂O₃ and magnesia-alumina spinel (MgO•Al₂O₃) is further reduced. By adjusting the components of the molten steel in position in the refining stage, the lime and the synthetic slag are immediately added to increase the basicity of slag to 0.9-1.2, which contributes to adsorbing the Al₂O₃ inclusions and SiO₂ acidic inclusions. Besides, as a result of such low basicity of slag in the refining stage, the ladle bottom blowing flow may be controlled 50% or less of the normal bottom blowing flow, so that the bottom blowing flow is greatly reduced, and the erosion to the refractory material of the ladle is further reduced.

As a further improvement of an implementation of the disclosure, chemical components of the silicon carbide include the following components in percent by mass: equal to or greater than 99.3% of SiC and the balance of inevitable impurities; and chemical components of the synthetic slag include the following components in percent by mass: 35-45% of CaO, 45-55% of SiO₂, 3-8% of MgO, less than or equal to 2% of Al₂O₃ and the balance of inevitable impurities. High purity silicon carbide may not only achieve rapid deoxidation, but also alleviate boiling of the molten steel as a result of pavement of the low-nitrogen carburant at the bottom of the ladle. By defining the chemical components and content of the synthetic slag, it may be guaranteed that the synthetic slag has low basicity, so that the ladle bottom blowing flow may be reduced, and the erosion to the refractory material of the ladle is further reduced.

As a further improvement of an implementation of the disclosure, in the billet casting stage, in the molten steel in the tundish, Als is less than or equal to 0.0005%; and in the inclusions of the molten steel, the content of the Al₂O₃ inclusions is less than or equal to 10%, sizes of the Al₂O₃ inclusions and magnesia-alumina spinel inclusions are less than 5 µm, and densities of the Al₂O₃ inclusions and the magnesia-alumina spinel inclusions with the sizes of 1-5 µm are less than or equal to 0.0005/mm². By controlling the content of the acid soluble aluminum Als in the molten steel, Al₂O₃ precipitated in the continuous casting process may be reduced, so that the contents, sizes, and densities of the brittle inclusions such as Al₂O₃ inclusions and magnesia-alumina spinel in the finally prepared cord steel are reduced, the cleanliness of the cord steel is improved, and the wire breakage ratio is reduced.

### BRIEF DESCRIPTION OF THE DRAWINGS

FIG. 1 shows distribution of inclusions in a cord steel prepared by an existing production process in an SiO₂-MnO-Al₂O₃ system ternary phase diagram;
FIG. 2 shows fracture morphology of a finer wire of the cord steel prepared by the existing production process as a result of inclusion of Al₂O₃ at a core of a coil rod;
FIG. 3 shows fracture morphology of the finer wire of the cord steel prepared by the existing production process as a result of inclusion of Al₂O₃ at an edge of the coil rod;
FIG. 4 shows fracture morphology of the finer wire of the cord steel prepared by the existing production process as a result of inclusion of magnesia-alumina spinel (MgO•Al₂O₃) at the core of the coil rod; and
FIG. 5 shows distribution of the inclusions in the cord steel prepared in an implementation of the disclosure in the SiO₂-MnO-Al₂O₃ system ternary phase diagram.

### DETAILED DESCRIPTION

An implementation of the disclosure provides a method for controlling brittle inclusions in cord steel, where chemical components of the cord steel include the following components in percent by mass: 0.70-0.95% of C, 0.15-0.45% of Si, 0.25-0.80% of Mn, 0.10-0.45% of Cr, less than or equal to 0.015% of P, less than or equal to 0.01% of S, less than or equal to 0.0008% of Al in total, less than or equal to 0.003% of N, less than or equal to 0.002% of O, and the balance of Fe and other inevitable impurities.

The method for controlling brittle inclusions in cord steel provided by the disclosure is obtained according to a plenty of experimental studies. The method for controlling brittle inclusions in cord steel is further described below in combination with specific examples.

The method for controlling brittle inclusions in cord steel includes the following steps performed in order:
(1) A furnace primary smelting stage
   performing smelting in a converter or an electric furnace and performing deoxidation alloying on molten steel, where the temperature of the molten steel at a smelting end-point is equal to or higher than 1650°C, C is equal to or greater than 0.10%, and O is less than or equal to 0.03%; pushing off the slag to tap at the smelting end-point, paving 0.5-1 kg/t silicon carbide and a 40-60% low-nitrogen carburant at a bottom of a ladle where the molten steel is carried before tapping, sequentially adding alloys for alloying in a tapping process, completing addition of all alloys when 75% of molten steel is tapped, starting to add the remaining 40-60% low-nitrogen carburant at a rate of 200-300 kg/min when 80% of the molten steel is tapped, finishing tapping after the low-nitrogen carburant is completely dissolved in the molten steel, adding the 0.5-1 kg/t silicon carbide to a top of ladle slag, and adding 3-5 kg/t synthetic slag to form slag.

Preferably, the alloys include ferrosilicon, manganese metal, and chromium iron, where Al in the ferrosilicon is less than or equal to 0.035%, Al in the manganese metal is less than or equal to 0.015%, Al in the chromium iron is less than or equal to 0.020% and C in the chromium iron is less than or equal to 0.15%, and N in the low-nitrogen carburant is less than or equal to 0.015%.

Preferably, bottom bricks, molten pool bricks and closer bricks of the ladle all are magnesia carbon bricks, and in the magnesia carbon bricks, Al₂O₃ is less than or equal to 3%; slag line bricks and air bricks of the ladle are magnesium-zirconium-carbon bricks, and in the magnesium-zirconium-carbon bricks, Al₂O₃ is less than or equal to 3%; and a long nozzle of the ladle is a long corundum nozzle, an inner wall of the long nozzle is coated with an SiO₂ coating, and the thickness of the SiO₂ coating is 3-8 mm.

More preferably, an upper limit of the number of use of the bottom bricks, the molten pool bricks, and the closer bricks of the ladle is 35-45; and an upper limit of the number of use of the slag line bricks and the air bricks of the ladle is 15-25. Thus, the stability of the quality of the refractory material of the ladle may be ensured, so that a situation that because the refractory material of the ladle is subjected to increasing severe erosion with extension of the service time, addition of the brittle inclusions such as Al₂O₃ inclusions and magnesia-alumina spinel in the finally prepared cord steel as a large amount of Al₂O₃ and MgO in the refractory material of the ladle enter the molten steel is avoided.

Preferably, a ladle bottom blowing flow in the initial tapping stage and the alloying process is 100-200 NL/min; the ladle bottom blowing flow in the process of starting to add the remaining 40-60% low-nitrogen carburant when 80% of the steel is tapped is 600-800 NL/min; and the ladle bottom blowing flow in the process of finishing tapping and adding the silicon carbide and the synthetic slag to the top of the ladle slag to form the slag is 300-500 NL/min.

Preferably, chemical components of the silicon carbide include the following components in percent by mass: equal to or greater than 99.3% of SiC and the balance of inevitable impurities; and chemical components of the synthetic slag include the following components in percent by mass: 35-45% of CaO, 45-55% of SiO₂, 3-8% of MgO, less than or equal to 2% of Al₂O₃ and the balance of inevitable impurities.

### (2) A refining stage

Feeding the molten steel subjected to furnace primary smelting to a ladle furnace for refining and detecting the temperature, the chemical components, and the content of the molten steel, adding the alloys according to the detected chemical components and content of the molten steel and feeding carbon wires to adjust the chemical components of the molten steel to meet the following conditions in percent by mass: 0.70-0.95% of C, 0.15-0.45% of Si, 0.25-0.80% of Mn, 0.10-0.45% of Cr, less than or equal to 0.015% of P, less than or equal to 0.01% of S, less than or equal to 0.0008% of Al in total, less than or equal to 0.003% of N, less than or equal to 0.002% of O, and the balance of Fe and other inevitable impurities; and adding lime, the silicon carbide, and the synthetic slag and performing electrification to slag, adjusting the temperature of the molten steel to 1510-1535°C, making the slag composition meet the following conditions in percent by mass: CaO/SiO₂=0.9-1.2, Al₂O₃≤5%, MgO 4-8%, [MnO+T.Fe] 2-5%, and the balance of inevitable impurities, then adjusting ladle bottom blowing to a soft stirring pattern, where soft stirring time is longer than 20 min, and performing tapping; and where [MnO+T.Fe] represents a sum of mass percent of MnO and T.Fe.

Preferably, the ladle bottom blowing flow during the time when the temperature, the chemical components and the content of the molten steel are detected is 100-150 NL/min; the ladle bottom blowing flow in the process of adding the alloys and feeding the carbon wires is 300-400 NL/min; the ladle bottom blowing flow in the process of performing electrification to slag is 200-300 NL/min; and the ladle bottom blowing flow in the soft stirring process is 30-80 NL/min.

Preferably, from finishing of tapping in the furnace primary smelting stage to completion of adjustment of the chemical components of the molten steel in the refining stage, the basicity of slag of the ladle is less than or equal to 0.6.

Preferably, in the refining stage, 1-2 kg/t lime, 1-1.5 kg/t silicon carbide, and 8-15 kg/t synthetic slag are added to make the basicity of slag of the ladle be 0.9-1.2.

Preferably, chemical components of the silicon carbide include the following components in percent by mass: equal to or greater than 99.3% of SiC and the balance of inevitable impurities; and chemical components of the synthetic slag include the following components in percent by mass: 35-45% of CaO, 45-55% of SiO₂, 3-8% of MgO, less than or equal to 2% of Al₂O₃ and the balance of inevitable impurities.

### (3) A billet casting stage

Conveying the molten steel after tapping in the refining stage to a continuous casting platform to stand for 15 min or more, importing stuffing sand into a slag receiving bucket at the start of ladle casting, and performing protective casting on the molten steel to a tundish to form a continuous casting billet.

Preferably, the stuffing sand is silicochromium stuffing sand, where Al₂O₃ is less than or equal to 5%.

Preferably, an inner wall of the tundish is coated with a magnesium coating, and in the magnesium coating, Al₂O₃ is less than or equal to 2%; a retaining wall of the tundish is a magnesium-zirconium-carbon retaining wall, and in the magnesium-zirconium-carbon retaining wall, Al₂O₃ is less than or equal to 5%; and an upper nozzle and a submersed nozzle of the tundish both are magnesium-carbon nozzles, and in the magnesium-carbon nozzles, Al₂O₃ is less than or equal to 5%.

After detection, in the molten steel in the tundish, the acid soluble aluminum Als is less than or equal to 0.0005%; and in the inclusions of the molten steel, the content of the Al₂O₃ inclusions is less than or equal to 10%, sizes of the Al₂O₃ inclusions and magnesia-alumina spinel inclusions are less than 5 µm, and densities of the Al₂O₃ inclusions and the magnesia-alumina spinel inclusions with the sizes of 1-5 µm are less than or equal to 0.0005/mm².

To make the objects, technical solutions and advantages of an implementation of the disclosure more clearly, the method for controlling brittle inclusions in cord steel in the implementation of the disclosure will be further described in combination with examples 1-2 of the implementation. Apparently, the described examples 1-2 are merely a part of examples of the disclosure, rather than, all the examples.

### Example 1

### (1) A furnace primary smelting stage

Smelting is performed in a 135 t converter, where the temperatures of the molten steel, the contents of C, and the contents of O at smelting end-points of the converters with heat numbers (1)-(4) are respectively shown in table 1.

**[Table 1]**

| Heat number | Temperature of the molten steel, °C | C, % | O, % |
|---|---|---|---|
| (1) | 1655 | 0.24 | 0.021 |
| (2) | 1650 | 0.31 | 0.012 |
| (3) | 1661 | 0.10 | 0.030 |
| (4) | 1657 | 0.19 | 0.027 |

The slag was pushed off to tap at the smelting end-point, silicon carbide and a 40-60% low-nitrogen carburant were paved at a bottom of a ladle where the molten steel was carried in advance before tapping, alloys for alloying were sequentially added in a tapping process, addition of all alloys was completed when 75% of molten steel was tapped, it was started to add the remaining 40-60% low-nitrogen carburant at a rate of 200-300 kg/min when 80% of the molten steel was tapped, tapping was finished after the low-nitrogen carburant was completely dissolved in the molten steel, the silicon carbide was added to a top of ladle slag, and the synthetic slag was added to form slag, where the basicity of slag of the ladle was less than or equal to 0.6. The quantities of the silicon carbide paved at the bottoms of the ladles in the converters with the heat numbers (1)-(4), the silicon carbide added into the tops of the slag of the ladles when tapping is finished, and the synthetic slag refer to table 2.

**[Table 2]**

| Heat number | Silicon carbide paved at the bottom of the ladle, kg/t | Silicon carbide added when tapping is finished, kg/t | Synthetic slag, kg/t |
|---|---|---|---|
| (1) | 0.9 | 0.5 | 3.0 |
| (2) | 0.5 | 0.9 | 3.3 |
| (3) | 1.0 | 0.6 | 5.0 |
| (4) | 0.7 | 1.0 | 4.5 |

The ladle bottom blowing is started in the full tapping process. In the converters with the heat numbers (1)-(4), in the initial tapping stage and the alloying process, the process of starting to add the remaining 40-60% low-nitrogen carburant when 80% of the steel is tapped, and the process of finishing tapping and adding silicon carbide and synthetic slag to the top of the ladle slag to form slag, the ladle bottom blowing flows are respectively shown in table 3.

**[Table 3]**

| Heat number | Initial tapping stage and alloying process, NL/min | Process of adding the remaining low-nitrogen carburant, NL/min | Finishing tapping, NL/min |
|---|---|---|---|
| (1) | 180 | 600 | 300 |
| (2) | 100 | 750 | 360 |
| (3) | 200 | 680 | 500 |
| (4) | 150 | 800 | 420 |

### (2) A refining stage

The molten steel subjected to furnace primary smelting was fed to a ladle furnace for refining and the temperature, the chemical components, and the content of the molten steel were detected, the alloys were added according to the detected chemical components and content of the molten steel and carbon wires were fed to adjust the chemical components of the molten steel to meet the following conditions in percent by mass: 0.70-0.95% of C, 0.15-0.45% of Si, 0.25-0.80% of Mn, 0.10-0.45% of Cr, 0.007-0.015% of P, 0.006-0.01% of S, 0.0005-0.0008% of Al in total, 0.0015-0.0030% of N, 0.001-0.002% of O, and the balance of Fe and other inevitable impurities; and lime, the silicon carbide, and the synthetic slag were added and electrification was performed to slag, the temperature of the molten steel was adjusted to 1510-1535°C, making the slag composition meet the following conditions in percent by mass: CaO/SiO₂=0.9-1.2, Al₂O₃≤5%, MgO 4-8%, [MnO+T.Fe] 2-5%, and the balance of inevitable impurities, then ladle bottom blowing was adjusted to a soft stirring pattern, where soft stirring time was longer than 20 min, and tapping was performed. The quantities of the lime, the silicon carbide, and the synthetic slag added into the ladle furnaces with the heat numbers (1)-(4) and the basicity of the slag in the ladles refer to table 4.

**[Table 4]**

| Heat number | Lime, kg/t | Synthetic slag, kg/t | Silicon carbide, kg/t | Basicity of slag |
|---|---|---|---|---|
| (1) | 2.0 | 8.0 | 1.3 | 1.2 |
| (2) | 1.7 | 10.6 | 1.4 | 1.1 |
| (3) | 1.0 | 15.0 | 1.5 | 0.9 |
| (4) | 1.3 | 14.7 | 1.0 | 1.0 |

In the ladle furnaces with the heat numbers (1)-(4), the ladle bottom blowing flows during the time of detecting the temperature, the chemical components, and the content of the molten steel, in the process of adding the alloys and feeding the carbon wires, in the process of performing electrification to slag and in the soft stirring process, and the soft stirring time are respectively shown in table 5.

**[Table 5]**

| Heat number | Ladle bottom blowing flow, NL/min | | | | Soft stirring time, min |
|---|---|---|---|---|---|
| | During the time of detecting the temperature, the chemical components, and the content of the molten steel | In the process of adding the alloys and feeding the carbon wires | In the process of performing electrification to slag | Soft stirring process | |
| (1) | 140 | 390 | 200 | 80 | 20 |
| (2) | 100 | 400 | 260 | 55 | 28 |
| (3) | 120 | 300 | 300 | 30 | 35 |
| (4) | 150 | 350 | 280 | 70 | 30 |

The alloys include ferrosilicon, manganese metal, and chromium iron, where the Al contents in the ferrosilicon, the manganese metal, and the chromium iron are shown in table 6. Besides, C in the chromium iron is less than or equal to 0.15%, and N in the low-nitrogen carburant is less than or equal to 0.015%.

**[Table 6]**

| Heat number | Ferrosilicon, % | Manganese metal, % | Chromium iron, % |
|---|---|---|---|
| (1) | 0.035 | 0.008 | 0.013 |
| (2) | 0.017 | 0.015 | 0.008 |
| (3) | 0.026 | 0.010 | 0.009 |
| (4) | 0.011 | 0.011 | 0.020 |

Chemical components of the silicon carbide include the following components in percent by mass: equal to or greater than 99.3% of SiC and the balance of inevitable impurities; and chemical components and mass percent of the synthetic slag are shown in table 7.

**[Table 7]**

| Heat number | CaO, % | SiO₂, % | MgO, % | Al₂O₃, % | Balance of inevitable impurities |
|---|---|---|---|---|---|
| (1) | 40 | 45 | 8 | 2.0 | Bal |
| (2) | 35 | 55 | 5 | 1.0 | Bal |
| (3) | 39 | 50 | 3 | 1.8 | Bal |
| (4) | 45 | 48 | 3 | 0.7 | Bal |

### (3) A billet casting stage

The molten steel after tapping in the refining stage was conveyed to a continuous casting platform to stand for 15 min or more, stuffing sand was imported into a slag receiving bucket at the start of ladle casting, and protective casting was performed on the molten steel to a tundish to form a continuous casting billet.

Bottom bricks, molten pool bricks and closer bricks of the ladle all are magnesia carbon bricks, and the numbers of use do not exceed 35-45; slag line bricks and air bricks of the ladle are magnesium-zirconium-carbon bricks, and the numbers of use do not exceed 15-25; a long nozzle of the ladle is a long corundum nozzle, an inner wall of the long nozzle is coated with an SiO₂ coating, and the thickness of the SiO₂ coating is 3-8 mm; the stuffing sand is silicochromium stuffing sand; an inner wall of the tundish is coated with a magnesium coating, a retaining wall of the tundish is a magnesium-zirconium-carbon retaining wall, and an upper nozzle and a submersed nozzle of the tundish all are magnesium-carbon nozzles.

The Al₂O₃ contents of the bottom bricks, molten pool bricks, closer bricks, slag line bricks, and air bricks of the ladle, the stuffing sand, and the magnesium coating, the retaining wall, the upper nozzle and the submersed nozzle of the tundish are shown in table 8.

**[Table 8]**

| Heat number | Bottom brick/% | Molten pool brick/% | Closer brick/% | Slag line brick/% | Air brick/% | stuffing sand/% | Magnesium coating/% | Retaining wall/% | Upper nozzle/% | Submersed nozzle/% |
|---|---|---|---|---|---|---|---|---|---|---|
| (1) | 1.2 | 1.4 | 2.8 | 3.0 | 0.8 | 3.7 | 1.5 | 3.9 | 2.9 | 1.7 |
| (2) | 0.7 | 1.8 | 1.6 | 1.2 | 1.7 | 5.0 | 0.7 | 5.0 | 5.0 | 3.8 |
| (3) | 2.9 | 0.9 | 0.5 | 2.3 | 3.0 | 2.6 | 2.0 | 2.2 | 4.3 | 3.6 |
| (4) | 1.5 | 3.0 | 1.7 | 1.9 | 2.5 | 4.1 | 0.9 | 4.8 | 2.7 | 5.0 |

A molten steel sample in the tundish is scanned with a Zeiss scanning electron microscope and inclusions with sizes larger than 1 µm are counted. The scanning area is 1000 mm². The Al₂O₃ content in the inclusions is less than or equal to 8.5%. Al₂O₃ and magnesia-alumina spinel inclusions of 5 µm or more are not found. The densities of the Al₂O₃ and magnesia-alumina spinel inclusions with the sizes of 1-5 µm are less than or equal to 0.0004/mm².

### Example 2

### (1) A furnace primary smelting stage

Smelting is performed in a 100 t electric furnace, where the temperatures of the molten steel, the contents of C, and the contents of O at smelting end-points of the converters with heat numbers (1)-(4) are respectively shown in table 9.

**[Table 9]**

| Heat number | Temperature of the molten steel, °C | C, % | O, % |
|---|---|---|---|
| (1) | 1658 | 0.20 | 0.023 |
| (2) | 1670 | 0.10 | 0.030 |
| (3) | 1663 | 0.14 | 0.026 |
| (4) | 1650 | 0.25 | 0.019 |

The slag was pushed off to tap at the smelting end-point, silicon carbide and a 40-60% low-nitrogen carburant were paved at a bottom of a ladle where the molten steel was carried in advance before tapping, alloys for alloying were sequentially added in a tapping process, addition of all alloys was completed when 75% of molten steel was tapped, it was started to add the remaining 40-60% low-nitrogen carburant at a rate of 200-300 kg/min when 80% of the molten steel was tapped, tapping was finished after the low-nitrogen carburant was completely dissolved in the molten steel, the silicon carbide was added to a top of ladle slag, and the synthetic slag was added to form slag, where the basicity of slag of the ladle was less than or equal to 0.6. The quantities of the silicon carbide paved at the bottoms of the ladles in the electric furnaces with the heat numbers (1)-(4), the silicon carbide added into the tops of the slag of the ladles when tapping is finished, and the synthetic slag refer to table 10.

**[Table 10]**

| Heat number | Silicon carbide paved at the bottom of the ladle, kg/t | Silicon carbide added when tapping is finished, kg/t | Synthetic slag, kg/t |
|---|---|---|---|
| (1) | 0.8 | 1.0 | 2.7 |
| (2) | 0.5 | 0.6 | 5.0 |
| (3) | 0.7 | 0.8 | 4.1 |
| (4) | 1.0 | 0.9 | 3.0 |

The ladle bottom blowing is started in the full tapping process. In the electric furnaces with the heat numbers (1)-(4), in the initial tapping stage and the alloying process, the process of starting to add the remaining 40-60% low-nitrogen carburant when 80% of the steel is tapped, and the process of finishing tapping and adding silicon carbide and synthetic slag to the top of the ladle slag to form slag, the ladle bottom blowing flows are respectively shown in table 11.

**[Table 11]**

| Heat number | Initial tapping stage and alloying process, NL/min | Process of adding the remaining low-nitrogen carburant, NL/min | Finishing tapping, NL/min |
|---|---|---|---|
| (1) | 150 | 650 | 380 |
| (2) | 200 | 800 | 430 |
| (3) | 190 | 720 | 500 |
| (4) | 100 | 600 | 300 |

### (2) A refining stage

The molten steel subjected to furnace primary smelting was fed to a ladle furnace for refining and the temperature, the chemical components, and the content of the molten steel were detected, the alloys were added according to the detected chemical components and content of the molten steel and carbon wires were fed to adjust the chemical components of the molten steel to meet the following conditions in percent by mass: 0.70-0.95% of C, 0.15-0.45% of Si, 0.25-0.80% of Mn, 0.10-0.45% of Cr, 0.01-0.015% of P, 0.008-0.01% of S, 0.0005-0.0008% of Al in total, 0.0019-0.0030% of N, 0.0011-0.0020% of O, and the balance of Fe and other inevitable impurities; and lime, the silicon carbide, and the synthetic slag were added and electrification was performed to slag, the temperature of the molten steel was adjusted to 1510-1535°C, making the slag composition meet the following conditions in percent by mass: CaO/SiO₂=0.9-1.2, Al₂O₃≤5%, MgO 4-8%, [MnO+T.Fe] 2-5%, and the balance of inevitable impurities, then ladle bottom blowing was adjusted to a soft stirring pattern, where soft stirring time was longer than 20 min, and tapping was performed. The quantities of the lime, the silicon carbide, and the synthetic slag added into the ladle furnaces with the heat numbers (1)-(4) and the basicity of the slag in the ladles refer to table 12.

**[Table 12]**

| Heat number | Lime, kg/t | Synthetic slag, kg/t | Silicon carbide, kg/t | Basicity of slag |
|---|---|---|---|---|
| (1) | 1.0 | 8.0 | 1.5 | 1.1 |
| (2) | 2.0 | 14.8 | 1.4 | 1.2 |
| (3) | 1.9 | 15.0 | 1.0 | 0.9 |
| (4) | 1.6 | 10.3 | 1.3 | 1.1 |

In the ladle furnaces with the heat numbers (1)-(4), the ladle bottom blowing flows during the time of detecting the temperature, the chemical components, and the content of the molten steel, in the process of adding the alloys and feeding the carbon wires, in the process of performing electrification to slag and in the soft stirring process, and the soft stirring time are respectively shown in table 13.

**[Table 13]**

| Heat number | Ladle bottom blowing flow, NL/min | | | | Soft stirring time, min |
|---|---|---|---|---|---|
| | During the time of detecting the temperature, the chemical components, and the content of the molten steel | In the process of adding the alloys and feeding the carbon wires | In the process of performing electrification to slag | Soft stirring process | |
| (1) | 140 | 390 | 270 | 70 | 28 |
| (2) | 100 | 400 | 300 | 80 | 33 |
| (3) | 120 | 300 | 200 | 40 | 30 |
| (4) | 150 | 350 | 220 | 30 | 20 |

The alloys include ferrosilicon, manganese metal, and chromium iron, where the Al contents in the ferrosilicon, the manganese metal, and the chromium iron are shown in table 14. Besides, C in the chromium iron is less than or equal to 0.15%, and N in the low-nitrogen carburant is less than or equal to 0.015%.

**[Table 14]**

| Heat number | Ferrosilicon, % | Manganese metal, % | Chromium iron, % |
|---|---|---|---|
| (1) | 0.030 | 0.007 | 0.009 |
| (2) | 0.015 | 0.010 | 0.008 |
| (3) | 0.035 | 0.012 | 0.020 |
| (4) | 0.018 | 0.015 | 0.014 |

Chemical components of the silicon carbide include the following components in percent by mass: equal to or greater than 99.3% of SiC and the balance of inevitable impurities; and chemical components and mass percent of the synthetic slag are shown in table 15.

**[Table 15]**

| Heat number | CaO, % | SiO₂, % | MgO, % | Al₂O₃, % | Balance of inevitable impurities |
|---|---|---|---|---|---|
| (1) | 43 | 45 | 7 | 2.0 | Bal |
| (2) | 40 | 50 | 6 | 1.0 | Bal |
| (3) | 36 | 55 | 3 | 1.8 | Bal |
| (4) | 35 | 49 | 8 | 0.7 | Bal |

### (3) A billet casting stage

The molten steel after tapping in the refining stage is conveyed to a continuous casting platform to stand for 15 min or more, stuffing sand was imported into a slag receiving bucket at the start of ladle casting, and protective casting was performed on the molten steel to a tundish to form a continuous casting billet.

Bottom bricks, molten pool bricks and closer bricks of the ladle all are magnesia carbon bricks, and the numbers of use do not exceed 35-45; slag line bricks and air bricks of the ladle are magnesium-zirconium-carbon bricks, and the numbers of use do not exceed 15-25; a long nozzle of the ladle is a long corundum nozzle, an inner wall of the long nozzle is coated with an SiO₂ coating, and the thickness of the SiO₂ coating is 3-8 mm; the stuffing sand is silicochromium stuffing sand; an inner wall of the tundish is coated with a magnesium coating, a retaining wall of the tundish is a magnesium-zirconium-carbon retaining wall, and an upper nozzle and a submersed nozzle of the tundish all are magnesium-carbon nozzles.

The Al₂O₃ contents of the bottom bricks, molten pool bricks, closer bricks, slag line bricks, and air bricks of the ladle, the stuffing sand, and the magnesium coating, the retaining wall, the upper nozzle and the submersed nozzle of the tundish are shown in table 16.

**[Table 16]**

| Heat number | Bottom brick/% | Molten pool brick/% | Closer brick/% | Slag line brick/% | Air brick/% | stuffing sand/% | Magnesium coating/% | Retaining wall/% | Upper nozzle/% | Submersed nozzle/% |
|---|---|---|---|---|---|---|---|---|---|---|
| (1) | 1.8 | 2.6 | 2.2 | 2.6 | 3.0 | 1.7 | 1.6 | 2.7 | 1.7 | 5.0 |
| (2) | 0.9 | 1.3 | 1.1 | 1.4 | 2.7 | 5.0 | 2.0 | 2.0 | 3.4 | 4.4 |
| (3) | 2.3 | 3.0 | 0.6 | 3.0 | 0.6 | 3.3 | 1.0 | 3.1 | 5.0 | 2.5 |
| (4) | 1.2 | 2.4 | 1.0 | 1.3 | 1.5 | 4.1 | 0.7 | 5.0 | 2.3 | 3.0 |

A molten steel sample in the tundish is scanned with a Zeiss scanning electron microscope and inclusions with sizes larger than 1 µm are counted. The scanning area is 1000 mm². The Al₂O₃ content in the inclusions is less than or equal to 10%. Al₂O₃ and magnesia-alumina spinel inclusions of 5 µm or more are not found. The densities of the Al₂O₃ and magnesia-alumina spinel inclusions with the sizes of 1-5 µm are less than or equal to 0.0005/mm².

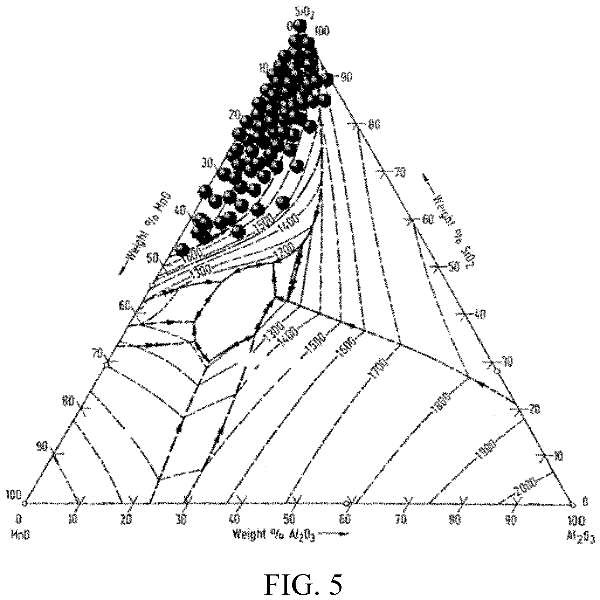

Besides, FIG. 5 shows distribution of the inclusions in the cord steel prepared in an implementation of the disclosure in the SiO₂-MnO-Al₂O₃ system ternary phase diagram. It may be known by comparing FIG. 5 with FIG. 1 that the inclusions in the cord steel provided by the disclosure are mainly SiO₂-MnO inclusions. Compared with the cord steel prepared by the existing production process, the brittle inclusions such as Al₂O₃ and magnesia-alumina spinel (MgO•Al₂O₃) are greatly reduced, so that the drawing wire breakage ratio caused by the brittle inclusions may be greatly reduced.

## Claims

1. A method for controlling brittle inclusions in cord steel, wherein chemical components of the cord steel comprise the following components in percent by mass: 0.70-0.95% of C, 0.15-0.45% of Si, 0.25-0.80% of Mn, 0.10-0.45% of Cr, less than or equal to 0.015% of P, less than or equal to 0.01% of S, less than or equal to 0.0008% of Al in total, less than or equal to 0.003% of N, less than or equal to 0.002% of O, and the balance of Fe and other inevitable impurities; and
the method comprises the following steps performed in order:
in a furnace primary smelting stage, performing deoxidation alloying on molten steel, paving 0.5-1 kg/t silicon carbide and a 40-60% low-nitrogen carburant at a bottom of a ladle where the molten steel is carried before tapping, sequentially adding alloys for alloying in a tapping process, completing addition of all alloys when 75% of molten steel is tapped, starting to add the remaining 40-60% low-nitrogen carburant at a rate of 200-300 kg/min when 80% of the molten steel is tapped, finishing tapping after the low-nitrogen carburant is completely dissolved in the molten steel, adding the 0.5-1 kg/t silicon carbide to a top of ladle slag, and adding 3-5 kg/t synthetic slag to form slag;
in a refining stage, feeding the molten steel subjected to furnace primary smelting to a ladle furnace for refining and detecting the temperature, the chemical components, and the content of the molten steel, adding the alloys according to the detected chemical components and content of the molten steel and feeding carbon wires to adjust the chemical components of the molten steel to meet the following conditions in percent by mass: 0.70-0.95% of C, 0.15-0.45% of Si, 0.25-0.80% of Mn, 0.10-0.45% of Cr, less than or equal to 0.015% of P, less than or equal to 0.01% of S, less than or equal to 0.0008% of Al in total, less than or equal to 0.003% of N, less than or equal to 0.002% of O, and the balance of Fe and other inevitable impurities; and adding lime, the silicon carbide, and the synthetic slag and performing electrification to slag, adjusting the temperature of the molten steel to 1510-1535°C, making the slag composition meet the following conditions in percent by mass: CaO/SiO₂=0.9-1.2, Al₂O₃≤5%, MgO 4-8%, [MnO+T.Fe] 2-5%, and the balance of inevitable impurities, then adjusting ladle bottom blowing to a soft stirring pattern, wherein soft stirring time is longer than 20 min, and performing tapping; and
in a billet casting stage, conveying the molten steel after tapping in the refining stage to a continuous casting platform to stand for 15 min or more, importing stuffing sand into a slag receiving bucket at the start of ladle casting, and performing protective casting on the molten steel to a tundish to form a continuous casting billet;
wherein the alloys comprise ferrosilicon, manganese metal, and chromium iron, and wherein Al in the ferrosilicon is less than or equal to 0.035%, Al in the manganese metal is less than or equal to 0.015%, Al in the chromium iron is less than or equal to 0.020% and C in the chromium iron is less than or equal to 0.15%, and N in the low-nitrogen carburant is less than or equal to 0.015%.

2. The method for controlling brittle inclusions in cord steel according to claim 1, wherein bottom bricks, molten pool bricks and closer bricks of the ladle all are magnesia carbon bricks, and in the magnesia carbon bricks, Al₂O₃ is less than or equal to 3%; slag line bricks and air bricks of the ladle are magnesium-zirconium-carbon bricks, and in the magnesium-zirconium-carbon bricks, Al₂O₃ is less than or equal to 3%; and a long nozzle of the ladle is a long corundum nozzle, an inner wall of the long nozzle is coated with an SiO₂ coating, and the thickness of the SiO₂ coating is 3-8 mm.

3. The method for controlling brittle inclusions in cord steel according to claim 1, wherein the stuffing sand is silicochromium stuffing sand, and wherein Al₂O₃ is less than or equal to 5%.

4. The method for controlling brittle inclusions in cord steel according to claim 1, wherein an inner wall of the tundish is coated with a magnesium coating, and in the magnesium coating, Al₂O₃ is less than or equal to 2%; a retaining wall of the tundish is a magnesium-zirconium-carbon retaining wall, and in the magnesium-zirconium-carbon retaining wall, Al₂O₃ is less than or equal to 5%; and an upper nozzle and a submersed nozzle of the tundish both are magnesium-carbon nozzles, and in the magnesium-carbon nozzles, Al₂O₃ is less than or equal to 5%.

5. The method for controlling brittle inclusions in cord steel according to claim 1, wherein the furnace primary smelting stage is performed in a converter or an electric furnace, the temperature of the molten steel at a smelting end-point is equal to or higher than 1650°C, C is equal to or greater than 0.10%, and O is less than or equal to 0.03%.

6. The method for controlling brittle inclusions in cord steel according to claim 1, wherein in the furnace primary smelting stage, a ladle bottom blowing flow in the initial tapping stage and the alloying process is 100-200 NL/min; the ladle bottom blowing flow in the process of starting to add the remaining 40-60% low-nitrogen carburant when 80% of the steel is tapped is 600-800 NL/min; and the ladle bottom blowing flow in the process of finishing tapping and adding the silicon carbide and the synthetic slag to the top of the ladle slag to form the slag is 300-500 NL/min.

7. The method for controlling brittle inclusions in cord steel according to claim 1, wherein in the refining stage, the ladle bottom blowing flow during the time when the temperature, the chemical components and the content of the molten steel are detected is 100-150 NL/min; the ladle bottom blowing flow in the process of adding the alloys and feeding the carbon wires is 300-400 NL/min; the ladle bottom blowing flow in the process of performing electrification to slag is 200-300 NL/min; and the ladle bottom blowing flow in the soft stirring process is 30-80 NL/min.

8. The method for controlling brittle inclusions in cord steel according to claim 1, wherein from finishing of tapping in the furnace primary smelting stage to completion of adjustment of the chemical components of the molten steel in the refining stage, the basicity of slag of the ladle is less than or equal to 0.6; and in the refining stage, 1-2 kg/t lime, 1-1.5 kg/t silicon carbide, and 8-15 kg/t synthetic slag are added to make the basicity of slag of the ladle be 0.9-1.2.

9. The method for controlling brittle inclusions in cord steel according to claim 1, wherein chemical components of the silicon carbide comprise the following components in percent by mass: equal to or greater than 99.3% of SiC and the balance of inevitable impurities; and chemical components of the synthetic slag comprise the following components in percent by mass: 35-45% of CaO, 45-55% of SiO₂, 3-8% of MgO, less than or equal to 2% of Al₂O₃ and the balance of inevitable impurities.

10. The method for controlling brittle inclusions in cord steel according to claim 1, wherein in the billet casting stage, in the molten steel in the tundish, Als is less than or equal to 0.0005%; and in the inclusions of the molten steel, the content of the Al₂O₃ inclusions is less than or equal to 10%, sizes of the Al₂O₃ inclusions and magnesia-alumina spinel inclusions are less than 5 µm, and densities of the Al₂O₃ inclusions and the magnesia-alumina spinel inclusions with the sizes of 1-5 µm are less than or equal to 0.0005/mm².
